# EUROPÄISCHE PATENTSCHRIFT

(11) **EP 3 217 472 B1**
(45) Veröffentlichungstag und Bekanntmachung des Hinweises auf die Patenterteilung: **11.07.2018**
(21) Anmeldenummer: 16158873.6
(22) Anmeldetag: 07.03.2016
(51) Int. Cl.: H01Q 1/22, H01Q 7/00, H01Q 21/00, H01Q 21/24

(54) **ANTENNE FÜR EINE RFID-LESEVORRICHTUNG UND VERFAHREN ZUM SENDEN UND/ODER EMPFANGEN VON RFID-SIGNALEN**
ANTENNA FOR AN RFID READING DEVICE AND METHOD FOR TRANSMITTING AND/OR RECEIVING RFID SIGNALS
ANTENNE POUR UN DISPOSITIF DE LECTURE RFID ET PROCEDE D'ENVOI ET/OU DE RECEPTION DE SIGNAUX RFID

(43) Veröffentlichungstag der Anmeldung: 13.09.2017
(73) Patentinhaber: SICK AG, 79183 Waldkirch (DE)
(72) Erfinder: Pudenz, Florian, 22049 Hamburg (DE)

(56) Entgegenhaltungen:
- EP-A1- 2 284 951
- US-A1- 2010 201 578
- US-A1- 2011 018 774
- US-A1- 2015 311 600
- HUANG J: "A TECHNIQUE FOR AN ARRAY TO GENERATE CIRCULAR POLARIZATION WITH LINEARLY POLARIZED ELEMENTS", IEEE TRANSACTIONS ON ANTENNAS AND PROPAGATION, IEEE SERVICE CENTER, PISCATAWAY, NJ, US, Bd. AP-34, Nr. 9, 1. September 1986 (1986-09-01), Seiten 1113-1124, XP002052667, ISSN: 0018-926X, DOI: 10.1109/TAP.1986.1143953

## Beschreibung

Die Erfindung betrifft eine Antenne für eine RFID-Lesevorrichtung und ein Verfahren zum Senden und/oder Empfangen von RFID-Signalen nach dem Oberbegriff von Anspruch 1 beziehungsweise 13 RFID-Lesevorrichtungen dienen der Identifikation von Objekten und Waren und werden unter anderem eingesetzt, um logistische Bewegungen zu automatisieren. An einem Identifikationspunkt, vor allem bei einem Wechsel des Besitzers der Ware oder einem Wechsel des Transportmittels, werden an den Waren befestigte RFID-Transponder ausgelesen und gegebenenfalls Informationen in den Transponder zurückgeschrieben. Die erfassten Informationen werden verwendet, um die Weiterleitung und Sortierung von Gütern und Produkten zu steuern. Wichtige Anwendungen für die automatische Identifikation sind logistische Verteilerzentren, etwa von Paketversendern, oder die Gepäckaufgabe in Flughäfen.

Die RFID-Lesevorrichtung regt über ihre Antenne durch elektromagnetische Strahlung in ihrem Lesebereich befindliche RFID-Transponder zur Abstrahlung der gespeicherten Information an, empfängt die entsprechenden Transpondersignale und wertet sie aus. Dazu wird häufig der UHF-Frequenzbereich (Ultrahochfrequenz) verwendet, da es hier in dem Standard ISO 18000-6 einen etablierten Rahmen gibt und zudem Transponder in unterschiedlichen Entfernungen von einigen Millimetern bis hin zu mehreren Metern ausgelesen werden können. UHF-RFID-Transponder sind in sehr kompakten Bauformen verfügbar und können dementsprechend auch an sehr kleinen Objekten angebracht werden. RFID-Lesevorrichtungen im UHF-Bereich sind aber in den momentan verfügbaren Bauformen für viele Anwendungen aufgrund der Gehäusegröße nicht einsetzbar, beispielsweise in einer Fräsmaschine zur Erkennung der eingesetzten Fräswerkzeuge.

Es besteht deshalb ein Bedarf an besonders kompakten Bauformen der Antennen, die innerhalb der RFID-Lesevorrichtung möglichst wenig Bauraum beanspruchen. Generell hängt jedoch die benötigte Antennengröße von der Frequenz ab. Diese wiederum ist kein freier Parameter, da beispielsweise für UHF ein Frequenzbereich zwischen 850 MHz und 950 MHz vorgesehen ist, innerhalb dessen länderspezifisch bestimmte Frequenzen genutzt werden. Eine Antenne für eine RFID-Lesevorrichtung kann daher nicht ohne weiteres eine Grundfläche kleiner λ/4 x λ14 annehmen, wobei λ die Wellenlänge des RFID-Signals ist.

Zwar ist in manchen Anwendungen denkbar, mit sehr kleinen externen Antennen zu arbeiten, aber dies bedeutet zusätzlichen Installationsaufwand. Außerdem sind bekannte Antennen für den RFID-Bereich, die überhaupt eine kleinere Gehäusegröße als λ/4 zulassen, linear polarisiert oder haben einen derart geringen Antennengewinn, dass Transponder nur in direktem Kontakt oder bestenfalls bis zu einem Abstand von einigen wenigen Zentimetern gelesen werden können. In RFID-Lesevorrichtungen werden aber vorzugsweise zirkular polarisierte Antennen eingesetzt, um Transponder in allen Winkellagen mit Energie zu versorgen und auszulesen. Eine weitere Anforderung an die Antenne ist Robustheit gegenüber Störungen in der Umgebung, wie etwa Metallflächen neben oder hinter der RFID-Lesevorrichtung oder zusätzliche Dielektrika direkt vor der Antenne. Es gibt keine Antennen, welche diese Kriterien in sich vereinen.

In der US 2009/0140946 A1 werden Strukturen beschrieben, die den Aufbau von sehr kompakten Antennen ermöglichen. Eine gegen Masse kurzgeschlossene Antennenschleife ist von einem als CLL (Capacitively Loaded Loop, kapazitiv aufgeladene Schleife) bezeichneten elektrischen Leiter umgeben. Der elektrische Leiter wird deshalb als kapazitiv aufgeladen bezeichnet, weil dort eine Kapazität eingefügt ist. Diese Kapazität im unmittelbaren Nahfeld der Antennenschleife ermöglicht es, die Resonanzfrequenz der Struktur signifikant zu reduzieren. Auf ein für herkömmliche Antennen erforderliches zusätzliches Anpassnetzwerk kann verzichtet und dadurch ein deutlich kleinerer Aufbau realisiert werden.

Das Funktionsprinzip ist dabei wie folgt: Die zeitliche Änderung eines an der Antenne angelegten Sendesignals erzeugt eine Änderung im Magnetfeld. Dieser magnetische Fluss wird von dem CLL aufgenommen und verstärkt (Resonanzüberhöhung). Der in den beiden Armen des CLL induzierte Strom erzeugt eine hohe Spannungsdifferenz am kapazitiven Element. Die im elektrischen Feld gespeicherte Kapazität ist bei richtiger Dimensionierung groß genug, um die Induktivität der beiden von Antennenschleife und CLL gebildeten Spulen auszugleichen. Das Verhalten erinnert an einen RLC-Schwingkreis. Die Größe der beiden Leiterschleifen ist natürlich ein wichtiger Faktor für die Resonanzfrequenz, denn mit steigender Resonanzfrequenz verringert sich die Größe der Struktur aufgrund der geringeren Wellenlänge. Das Größenverhältnis von äußerer zu inneren Spule ist aber auch wichtig für die Verkopplung der beiden Spulen zueinander.

Aus der Patentanmeldung US 8 963 794 B2 sind ähnliche sehr kompakte Antennenstrukturen bekannt. Auch die US 2010/0201578 A1 offenbart eine Antenne, die einen Halbbogen mit mindestens einer Kapazität aufweist.

Demnach sind Bauformen bekannt, die deutlich kompakter sind als bisher bekannte Patch-, Stab, oder Rahmenantennen. Die Anpassung und damit auch die mögliche Bandbreite der Antennen wird aber von der verfügbaren Massefläche (Groundplane) der Antenne beeinflusst. Ein kompaktes Gerät würde auch nur eine kleine Groundplane bieten. Die Bandbreite der gezeigten Antennenformen würde damit für zahlreiche Anwendungen im UHF-RFID-Bereich nicht ausreichen. Außerdem sind auch die vorgestellten besonders kompakten Antennen linear polarisiert.

Die EP 2 284 951 A1 beschreibt eine Schaltanordnung fur Antennen, die in einem RFID-System einsetzbar ist und wahlweise zirkular oder linear polarisierte Signale erzeugt. Dazu ist ein Netz aus mehreren Leitungen der Länge λ/4 vorgesehen, die mittels mehrerer Schalter auf unterschiedliche Weise verbunden werden konnen. Es gibt zwei Ausgänge, wobei die Leistung je nach Schaltzustand an dem einen Ausgang, dem anderen Ausgang oder je zur Halfte an beiden Ausgängen anliegt. Verbindet man nun eine horizontal polarisierte Antenne mit dem einen und eine vertikal polarisierte Antenne mit dem anderen Ausgang, so ergibt sich in den verschiedenen Schaltzuständen eine horizontale, vertikale oder zirkulare Polarisation. Die Antennen selbst sind nicht variabel und beispielsweise Patch- oder Schlitzantennen.

Aus der US2015/0311600A1 ist eine zirkular polarisierte Antenne bekannt, die aus vier zu einer Rechtecksäule angeordneten Einzelantennen zusammengesetzt ist. Die Einzelantennen werden mit vier um je 90° versetzten Phasen angesteuert. Es wird diskutiert, dass die Einzelantennen durch strukturelle Veränderungen an eine andere Frequenz angepasst werden können. Insbesondere kann dies auf je zwei gegenüberliegende Einzelantennen in einer gleichen Weise geschehen, um damit das Achsenverhältnis zu beeinflussen.

Es ist daher Aufgabe der Erfindung, eine robuste und kompakte Antenne für eine RFID-Lesevorrichtung anzugeben.

Diese Aufgabe wird durch eine Antenne für eine RFID-Lesevorrichtung und ein Verfahren zum Senden und/oder Empfangen von RFID-Signalen nach Anspruch 1 beziehungsweise 13 gelöst. Die Antenne basiert auf einer CLL-Einzelantenne, deren Aufbau sich an den oben im Rahmen der Diskussion des Standes der Technik vorgestellten Konzepten orientiert. Unter einer CLL-Einzelantenne wird also eine Antenne verstanden, die eine innere Antennenschleife und eine die innere Antennenschleife umgebende kapazitiv aufgeladene Leiterschleife (CLL) aufweist, in die eine Kapazität eingebracht ist. Dabei ist der Begriff Schleife wie in der Antennentechnik üblich topologisch zu verstehen, lässt also auch unrunde Formen wie Rechtecke zu. Die Erfindung geht nun von dem Grundgedanken aus, mehrere CLL-Einzelantennen zusammenzuschalten, um eine für RFID geeignete Antenne zu erhalten. Dazu werden mindestens zwei CLL-Einzelantennen derart unterschiedlich orientiert und phasenversetzt betrieben, dass insgesamt eine zirkular polarisierte Antenne entsteht.

Die Erfindung hat den Vorteil, dass eine kompakte, zirkular polarisierte Antenne aufgebaut werden kann, die insbesondere auch eine Grundfläche < λ/4 x λ/4 erreichen kann. Die Antenneneigenschaften können durch Abstimmung der Kapazitätswerte der CLL-Einzelantennen sehr einfach und genau an ihre jeweiligen Umgebungsbedingungen angepasst werden, beispielsweise bei Montage auf einer Metallplatte.

Die mehreren CLL-Einzelantennen sind vorzugsweise untereinander baugleich. Dadurch werden Herstellkosten verringert und das Verhalten der Antenne insgesamt ist leichter beherrschbar.

Die CLL-Einzelantenne weisen bevorzugt eine Massefläche auf, die mit der inneren Antennenschleife und/oder der umgebenden Leiterschleife verbunden ist. Die CLL-Einzelantenne weist demnach eine eigene Massefläche oder Groundplane auf

Die innere Antennenschleife ist bevorzugt u-förmig ausgebildet, wobei ein erster Endpunkt mit einer Speisungsleitung und ein zweiter Endpunkt mit einer Massefläche verbunden ist. Die innere Antennenschleife ist demnach eine halbe Schleife von in etwa 180°, die am einen Ende gespeist und am anderen Ende auf eine eigene oder mehreren CLL-Einzelantennen gemeinsame Groundplane kurzgeschlossen ist.

Die umgebende kapazitiv aufgeladene Leiterschleife ist bevorzugt u-förmig ausgebildet und an beiden Endpunkten mit einer Massefläche verbunden. Die Topologie, insbesondere auch Geometrie der umgebenden Leiterschleife mit einer halben Schleife von in etwa 180°, entspricht damit insbesondere einer Vergrößerung der inneren Antennenschleife. Die umgebende Leiterschleife ist an beiden Endpunkten mit einer eigenen Grounplane der CLL-Einzelantenne oder einer mehreren CLL-Einzelantennen gemeinsamen Groundplane verbunden.

Die in die umgebende kapazitiv aufgeladene Leiterschleife eingebrachte Kapazität ist vorzugsweise elektrisch verstellbar. Sie hat also einen durch Ansteuerung veränderlichen Kapazitätswert, über den die Resonanzfrequenz im laufenden Betrieb abgestimmt werden kann. So wird ein größeres Frequenzband abgedeckt, im Idealfall sämtliche weltweit verwandten RFID-Frequenzbänder oder zumindest UHF-RFID-Frequenzbänder mit nur einer Bauform. Beispielhafte geeignete Bauelemente sind eine Varaktordiode oder ein digital ansteuerbarer integrierter Kondensatorschaltkreis. Alternativ ist auch eine fixe Kapazität in Form eines statischen Kondensatorelements oder eines Spalts in einer zumindest teilweise als Metallfläche ausgebildeten umgebenden Leiterschleife denkbar. Dann ist die Anpassung der Resonanzfrequenz aber nur einmalig per Design und nicht mehr dynamisch im Betrieb möglich.

Die innere Antennenschleife und die umgebende kapazitiv aufgeladene Leiterschleife der CLL-Einzelantenne sind vorzugsweise in einer Ebene angeordnet. Die CLL-Einzelantenne hat damit eine flache, praktisch zweidimensionale Form. Sofern die CLL-Einzelantenne eine eigene Groundplane aufweist, ist auch diese vorzugsweise flach ausgestaltet und liegt in derselben Ebene.

Die mehreren CLL-Einzelantennen sind vorzugsweise auf einer gemeinsamen Grundfläche angeordnet. Dies ist zunächst geometrisch als gemeinsame Ebene zu verstehen. Nochmals bevorzugt ist die Grundfläche aber auch eine Massefläche beziehungsweise Groundplane im antennentechnischen Sinne mit entsprechenden leitenden Verbindungen der inneren Antennenschleifen und umgebenden Leiterschleifen oder, sofern vorhanden, der Groundplanes der CLL-Einzelantennen.

Die Antenne weist bevorzugt zwei CLL-Einzelantennen auf, die zueinander in einem 90°-Winkel orientiert sind, wobei eine Speiseschaltung die beiden CLL-Einzelantennen mit einem gegenseitigen Phasenversatz von 90° betreibt. Dadurch wird die zirkulare Polarisation mit nur zwei CLL-Einzelantennen erreicht. Die Speiseschaltung beziehungsweise das Speisenetzwerk weist bevorzugt nur einen 90°-Leistungsteiler auf und ist demensprechend einfach und kompakt.

Alternativ weist die Antenne vier CLL-Einzelantennen auf, die zueinander jeweils in einem 90°-Winkel orientiert sind, wobei die Speiseschaltung die CLL-Einzelantennen mit einem jeweiligen Phasenversatz von 90° betreibt. Die CLL-Einzelantennen sind beispielsweise in einem Viereck angeordnet, das von einer gemeinsamen Groundplane gebildet sein kann. Sie werden mit der passenden Phase 0°, 90°, 180° und 270° betrieben. Das Speisenetzwerk weist vorzugsweise mehrere 90°-Leistungsteiler auf, insbesondere drei 90°-Leistungsteiler.

Die CLL-Einzelantennen sind bevorzugt jeweils senkrecht zu einer Ebene und kreuzförmig zueinander ausgerichtet. Diese vertikale Ausrichtung beansprucht besonders wenig Volumen für die Antenne in der RFID-Lesevorrichtung.

Die CLL-Einzelantennen sind vorzugsweise in einer Ebene angeordnet. Dabei handelt es sich nochmals bevorzugt um die Ebene einer gemeinsamen Groundplane. Die horizontale Ausrichtung ist eine Alternative, in der die gesamte Antenne im Wesentlichen flach ausgebildet werden kann.

Die Antenne ist bevorzugt rechtsdrehend zirkular polarisiert, und die CLL-Einzelantennen sind so zu einer gemeinsamen Grundfläche orientiert, dass der erste Endpunkt weiter von der Grundfläche beabstandet ist als der zweite Endpunkt. Alternativ ist die Antenne linksdrehend zirkular polarisiert, und die CLL-Einzelantennen sind so zu der gemeinsamen Grundfläche orientiert, dass der erste Endpunkt näher von der Grundfläche beabstandet ist als der zweite Endpunkt. Diesen Ausführungsformen liegt die Erkenntnis zugrunde, dass sich das Achsenverhältnis verbessern, d.h. verringern lässt, wenn die CLL-Einzelantennen je nach Drehrichtung der Polarisation bezüglich der gemeinsamen Grundfläche in bestimmter Weise orientiert sind. Es hat also einen Einfluss auf das Achsenverhältnis, ob der Speisepunkt der inneren Antennenschleife oberhalb oder unterhalb ihrer Verbindung zur Massefläche liegt. Die CLL-Einzelantennen stehen anschaulich gesprochen in jeweiligen Ausführungsformen für eine der beiden Drehrichtungen der Polarisation gegenüber der anderen Drehrichtung kopfüber, und dabei kommt es auf die gewünschte Drehrichtung an, welche Orientierung der CLL-Einzelantennen, also kopfüber oder nicht, die vorteilhaftere ist.

Die Kapazität der umgebenden kapazitiv aufgeladenen Leiterschleife mindestens einer CLL-Einzelantenne wird bevorzugt verstimmt, insbesondere maximal verstimmt, um die Polarisation zu verändern. Durch starkes Verstimmen können eine oder mehrere CLL-Einzelantennen bezüglich einer relevanten Resonanzfrequenz geschwächt oder sogar nahezu ausgeschaltet werden. Das beeinflusst dann dementsprechend die Polarisation und erlaubt deren Anpassung im Betrieb.

In einer Ausführungsform mit vier CLL-Einzelantennen wird bevorzugt die Kapazität der umgebenden kapazitiv aufgeladenen Leiterschleife zweier diagonal gegenüberliegender CLL-Einzelantennen verstimmt, insbesondere maximal verstimmt, um eine elliptische Polarisation einzustellen. Das ist ein Spezialfall des Schwächens oder Ausschaltens von CLL-Einzelantennen, und es erlaubt ein Umschalten zwischen zirkularer und elliptischer Polarisation, d.h. annähernd lineare Polarisation. Ein solcher Wechsel zwischen zirkularer, horizontaler und vertikaler Polarisation bietet den Vorteil, einzelne Transponder in bestimmten Anwendungen mit definierter Ausrichtung durch eine gezielte Anpassung der Polarisation vorzuselektieren.

In bevorzugter Weiterbildung ist eine RFID-Lesevorrichtung mit mindestens einer erfindungsgemäßen Antenne zum Senden von RFID-Signalen an einen RFID-Transponder und/oder zum Empfangen von RFID-Signalen von einem RFID-Transponder vorgesehen, wobei die RFID-Lesevorrichtung weiterhin eine Auswertungseinheit zum Eincodieren einer RFID-Information in die RFID-Signale und/oder zum Auslesen einer RFID-Information aus den RFID-Signalen aufweist. Die Antenne ermöglicht eine besonders kompakte Bauform der RFID-Lesevorrichtung, während sie weiterhin das benötigte Frequenzband beispielsweise im UHF-Bereich abdeckt. Eine solche RFID-Lesevorrichtung wird bevorzugt in stationärer Montage an einem Lesebereich eines Förderers oder eines Leseportals zum Auslesen mindestens eines auf dem Förderer oder durch das Leseportal bewegten RFID-Transponders eingesetzt.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung einer CLL-Einzelantenne;
- Fig. 2: ein Blockschaltbild einer zirkular polarisierten Antenne aus zwei CLL-Einzelantennen mit Speisenetzwerk;
- Fig. 3: ein Blockschaltbild einer zirkular polarisierten Antenne aus vier CLL-Einzelantennen mit Speisenetzwerk;
- Fig. 4: ein Blockschaltbild einer verallgemeinerten Antenne mit n CLL-Einzelantennen;
- Fig. 5: eine dreidimensionale Ansicht einer beispielhaften Geometrie einer Antenne mit vier CLL-Einzelantennen in horizontaler Ausrichtung;
- Fig. 6: eine dreidimensionale Ansicht ähnlich Figur 5, jedoch mit vertikaler Ausrichtung der vier CLL-Einzelantennen;
- Fig. 7: eine Darstellung einer rechtsdrehend zirkular polarisierten Antenne aus vier CLL-Einzelantennen, bei denen der Speisepunkt unterhalb des Kontaktpunktes zum Rahmen liegt;
- Fig. 8: eine Darstellung ähnlich Figur 7, jedoch für eine linksdrehend zirkular polarisierte Antenne mit gegenüber Figur 7 kopfüber angeordneten CLL-Einzelantennen;
- Fig. 9: ein Blockschaltbild einer Antenne aus vier CLL-Einzelantennen, von denen einige zur Veränderung der Polarisationseigenschaften stark verstimmt werden;
- Fig. 10: ein Strahlungsdiagramm des Antennengewinns zur Illustration der Auswirkungen einer gezielten Verstimmung von CLL-Einzelantennen; und
- Fig. 11: ein Polardiagramm des Achsenverhältnisses zur Illustration der Auswirkungen einer gezielten Verstimmung von CLL-Einzelantennen.

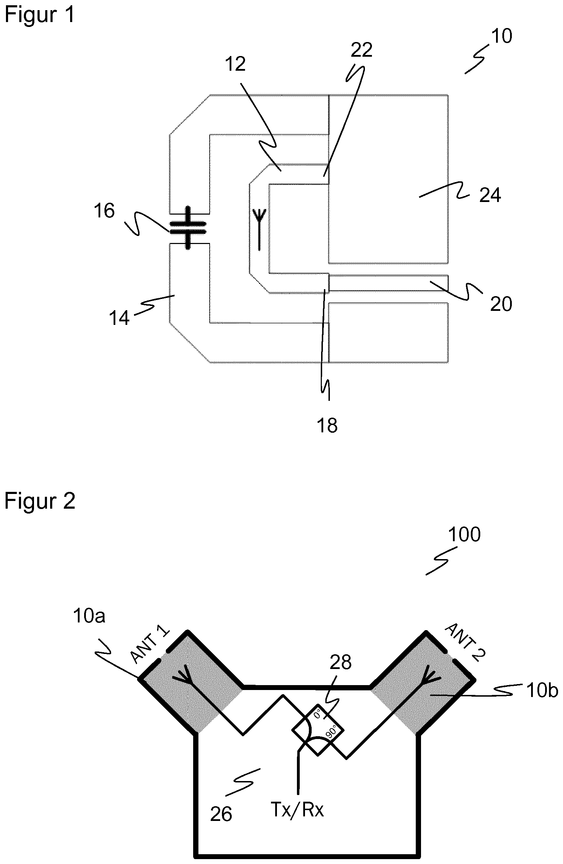

Figur 1 zeigt eine schematische Darstellung des Aufbaus einer CLL-Einzelantenne 10 (Capacitively Loaded Loop, kapazitiv aufgeladene Schleife). Sie weist eine innere Antennenschleife 12 und eine die innere Antennenschleife 12 umgebende CLL oder kapazitiv aufgeladene Leiterschleife 14 auf. In die umgebende Leiterschleife 14 ist eine Kapazität 16 eingebracht. Beispielsweise ist die umgebende Leiterschleife 14 als Metallrahmen und die Kapazität 16 als Spalt darin ausgebildet. Alternativ wird ein eigener Kondensator als Kapazität 16 eingesetzt.

Die innere Antennenschleife 12 ist in diesem Ausführungsbeispiel u-förmig. Unabhängig von der konkreten Schleifengeometrie weist die innere Antennenschleife 12 einen ersten Endpunkt 18, der mit einer Speiseleitung 20 verbunden ist, und einen zweiten Endpunkt 22 auf, der mit einer Massefläche 24 (Groundplane) verbunden ist. Auch die umgebende Leiterschleife 14 ist u-förmig und an beiden Endpunkten mit der Massefläche 24 verbunden, wobei dadurch zugleich ein metallischer Rahmen der CLL-Einzelantenne 10 gebildet wird. Die ringförmige Struktur um die innere Antennenschleife 12 herum nimmt den magnetischen Fluss auf und verstärkt ihn. Das Prinzip entspricht demjenigen, das einleitend zum Stand der Technik von CLL diskutiert wurde.

Die CLL-Einzelantenne 10 hat insgesamt eine sehr kompakte, im konkreten Ausführungsbeispiel auch flache Bauform. Zunächst ist die Bandbreite, sowohl für die S11-Anpassung als auch für den Gewinn über Frequenz, im Vergleich mit bisher in RFID-Lesevorrichtungen genutzten Antennen deutlich geringer. Die Resonanzfrequenz kann aber durch Veränderung des Kapazitätswertes der Kapazität 16 angepasst werden.

Das ist nicht nur anfänglich im Design durch geeignete Wahl der Kapazität 16 möglich, sondern sogar durch Ansteuerung im Betrieb, sofern eine veränderliche Kapazität 16 eingesetzt wird, wie eine Varaktordiode oder ein digital ansteuerbarer integrierter Kondensatorschaltkreis. Dadurch kann ein gezielter Frequenzwechsel ebenso vorgenommen werden wie eine Adaption an die jeweilige Einsatzumgebung.

Figur 2 zeigt ein Blockschaltbild einer zirkular polarisierten Antenne 100, die aus zwei CLL-Einzelantennen 10a-b kombiniert ist. Die jeweiligen CLL-Einzelantennen 10a-b sind beispielsweise aufgebaut wie soeben zu Figur 1 erläutert. Eine CLL-Einzelantenne 10a-b eignet sich wegen ihrer linearen Polarisation nur sehr bedingt für den Einsatz in einer RFID-Lesevorrichtung. Dieser Nachteil wird durch die Kombination mehrerer CLL-Einzelantennen 10a-b aufgehoben, wodurch eine gewünschte Polarisation, insbesondere zirkulare Polarisation erreichbar wird.

Die beiden CLL-Einzelantennen 10a-b sind zueinander um 90° verkippt. Sie werden mithilfe eines Speisenetzwerks 26, das einen 90°-Leistungsteiler aufweist, mit gleich großem Eingangssignal und 90° Phasenversatz betrieben, um die zirkulare Polarisation zu erzeugen.

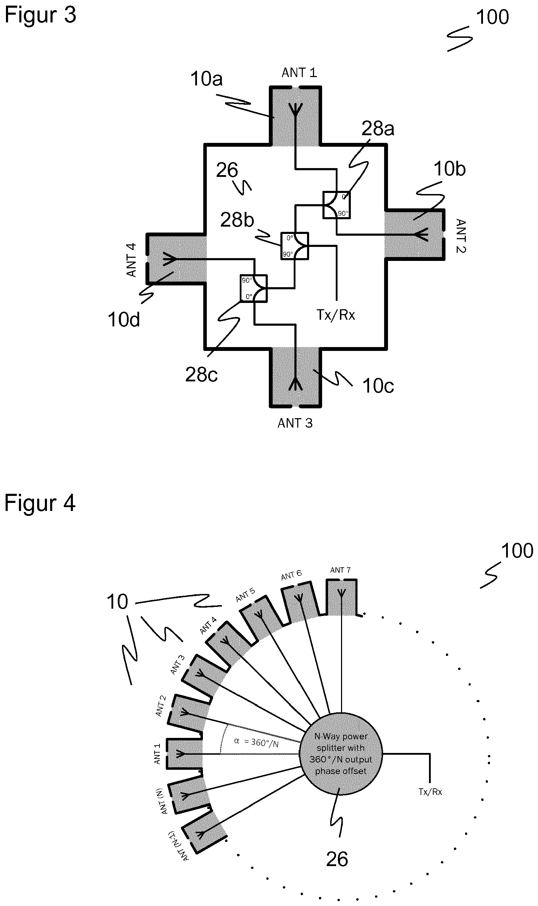

Figur 3 zeigt ein Blockschaltbild einer weiteren zirkular polarisierten Antenne 100 für eine RFID-Lesevorrichtung, die sich von Figur 2 dadurch unterscheidet, dass nun vier CLL-Einzelantennen 10a-d kombiniert werden. Die CLL-Einzelantennen 10a-d sind um jeweils 90° gegeneinander verkippt, und das Speisenetzwerk 26 weist nun mehrere, hier drei 90°-Leistungsteiler 28a-c auf, um die CLL-Einzelantennen 10a-d zur Erzeugung der zirkularen Polarisation mit gleich großem Einfangssignal und gegenseitigem Phasenversatz von 90° zu betreiben.

Wie in Figur 4 illustriert, kann dieses Prinzip von zwei oder vier CLL-Einzelantennen auf n CLL-Einzelantennen 10 verallgemeinert werden. Diese CLL-Einzelantennen werden so gegeneinander verkippt, dass sie sich 360° gleichmäßig aufteilen. Ein entsprechendes Leistungsteiler- oder Speisenetzwerk 26 versorgt die CLL-Einzelantennen 10 mit der dazu passenden Phase. Durch die Verwendung zusätzlicher CLL-Einzelantennen 10 kann das Achsenverhältnis noch weiter reduziert und robuster gegen Veränderungen der Umgebung gemacht werden. Erst der kompakte Aufbau der CLL-Einzelantennen 10 erlaubt überhaupt solche Varianten, in denen mehrere Einzelantennen in einem kompakten gemeinsamen Gehäuse untergebracht sind.

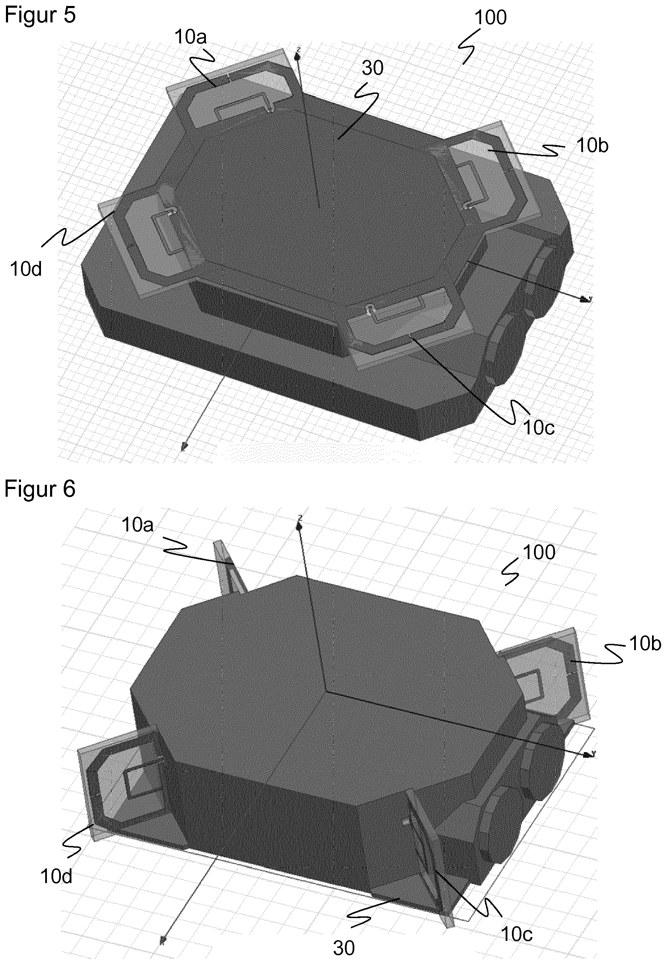

Die Figuren 5 und 6 zeigen jeweils eine dreidimensionale Ansicht einer beispielhaften Geometrie einer Antenne 100 mit vier CLL-Einzelantennen 10a-d. Funktionell entspricht dies der Ausführungsform nach Figur 3. Bei der Kombination von vier CLL-Einzelantennen 10a-d in einem Gehäuse gibt es die Möglichkeit, die CLL-Einzelantennen 10a-d parallel zu einer gemeinsamen Grundfläche 30 oder senkrecht dazu anzuordnen. Daraus ergibt sich eine horizontale Anordnung wie in Figur 5 oder alternativ eine senkrechte Anordnung wie in Figur 6. Die gemeinsame Grundfläche 30 dient vorzugsweise auch als Groundplane der Antenne 100, die leitend mit den jeweiligen Masseflächen 24 der CLL-Einzelantennen 10a-d verbunden ist.

Die horizontale Anordnung wie in Figur 5 ermöglicht eine flachere Antenne 100. In der vertikalen Anordnung gemäß Figur 6 kann jedoch ein geringeres resultierendes Achsenverhältnis erzielt werden. Für die Auswahl zwischen den beiden Bauformen sollten daher die geometrischen und funktionellen Anforderungen abgewogen werden.

Für die vertikale Anordnung hat sich gezeigt, dass sich das Achsenverhältnis weiter verbessern lässt, wenn die Ausrichtung des mit der Speiseleitung 20 verbundenen ersten Endpunkts 18 der inneren Antennenschleife 12 beachtet wird. Für ein ideales, also niedriges Achsenverhältnis der Antenne 100 sollte diese Ausrichtung entsprechend der Drehrichtung der zirkularen Polarisation gewählt werden, wobei die Drehrichtung wiederum durch die jeweiligen Phasendifferenzen bei der Ansteuerung der CLL-Einzelantennen 10a-d festgelegt ist.

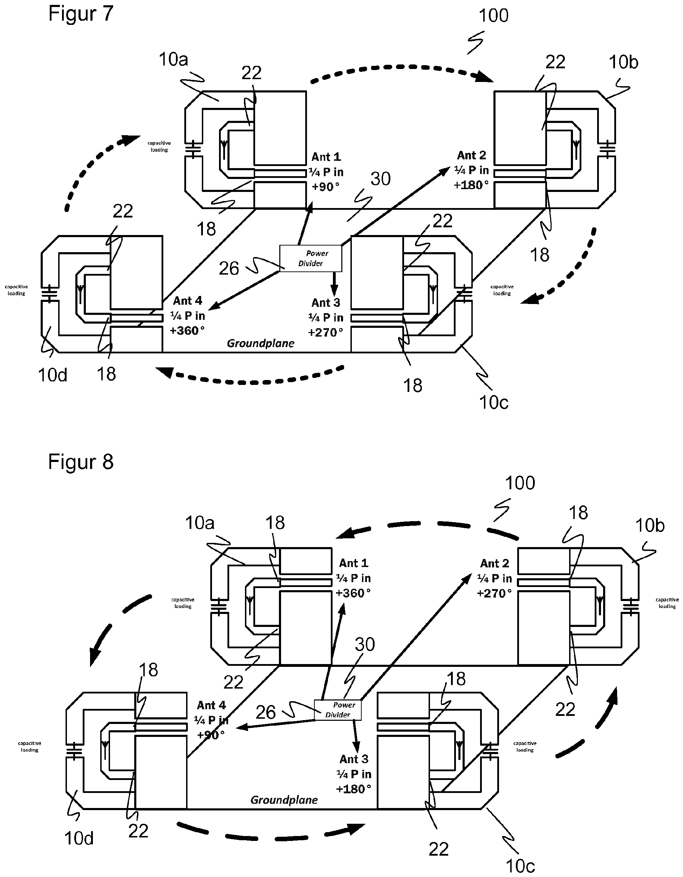

Dies ist in den Figuren 7 und 8 illustriert. Figur 7 zeigt eine rechtsdrehend zirkular polarisierte Antenne 100. Dort ist die CLL-Einzelantenne 10a-d und damit die innere Antennenschleife 12 so orientiert, dass der erste Endpunkt 18 unterhalb des zweiten Endpunktes 22 liegt. Der Speisepunkt der inneren Antennenschleife 12 liegt also unterhalb des Kontaktpunkts zur Massefläche 24.

Figur 8 zeigt eine linksdrehend zirkular polarisierte Antenne 100, in dem die CLL-Einzelantennen 10a-d im Vergleich zu Figur 7 gerade kopfüber stehen, d.h. mit dem ersten Endpunkt 18 oberhalb des zweiten Endpunktes 22. Indem der in Figur 7 und 8 illustrierte Zusammenhang von Orientierung der CLL-Einzelantennen 10a-d und Drehrichtung der Polarisation beachtet wird, lässt sich das Achsenverhältnis weiter verbessern.

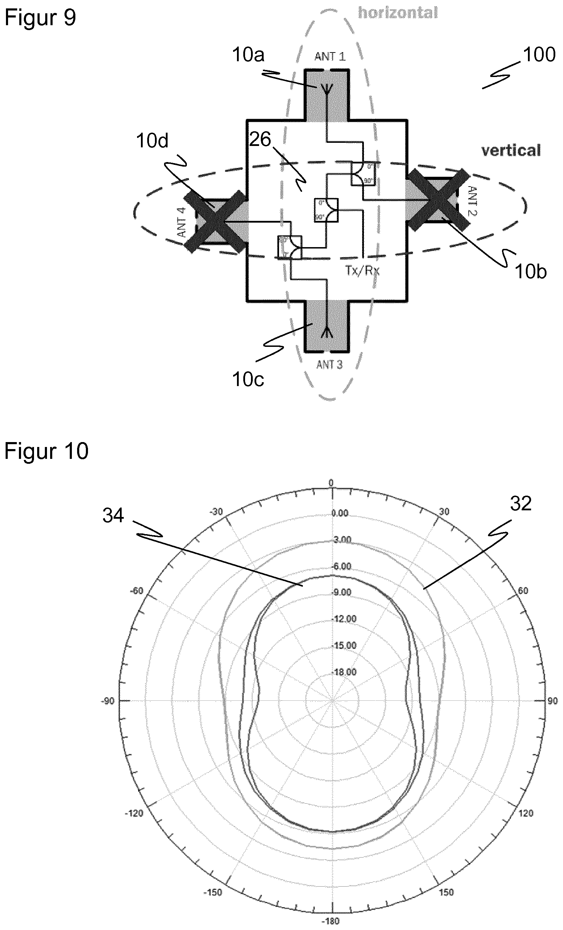

Figur 9 zeigt noch einmal ein Blockschaltbild einer Antenne 100 aus vier CLL-Einzelantennen 10a-d ähnlich Figur 3. Daran soll illustriert werden, dass in einer bevorzugten Ausführungsform die Polarisation der Antenne 100 durch gezielte Verstimmung von ausgewählten CLL-Einzelantennen 10a-d verändert werden kann. Konkret werden in dem Beispiel gegenüberliegende CLL-Einzelantennen 10b, 10d oder 10a, 10c durch entsprechende Anpassung ihrer Kapazität 16 möglichst stark verstimmt.

Bei Betrieb aller vier CLL-Einzelantennen 10a-d mit gleicher Sendeleistung und 90° Phasenversatz zueinander kann eine zirkulare Polarisation mit einem sehr guten Achsenverhältnis von <1dB in Hauptstrahlrichtung erreicht werden. Wird nun beispielsweise der Kapazitätswert der Kapazität 16 an den CLL-Einzelantennen 10b, 10d gezielt verändert, beispielsweise um 30 % verringert, so führt das an diesen CLL-Einzelantennen 10b, 10d zu einer um etwa 20 % höheren Resonanzfrequenz. Die Anpassung der CLL-Einzelantenne 10b, 10d bei Sendefrequenz wird damit so schlecht, dass nur noch ein geringer Bruchteil des vorher abgestrahlten Signals ausgesendet wird. Das Sendesignal, das die verstimmten CLL-Einzelantennen 10b, 10d durch den Leistungsteiler 28a-c erreicht, wird wegen der schlechten Anpassung fasst vollständig reflektiert und in den Abschlusswiderständen der Leistungsteiler 28a-c in Wärme umgewandelt.

Der Großteil der Abstrahlung geschieht jetzt nur noch über die beiden anderen, nicht verstimmten CLL-Einzelantennen 10a, 10c. Die Änderung wird erkennbar in einem deutlich erhöhten Achsenverhältnis, das in Simulationen von <1dB auf >17dB in Hauptstrahlrichtung ansteigt, und einem geringeren Antennengewinn.

Effektiv wird so anstelle der ursprünglichen zirkularen Polarisation eine stark elliptische, annähernd lineare Polarisation erreicht. Dabei ist durch Wahl des verstimmten Antennenpaares 10b, 10d oder 10a, 10c eine horizontale oder eine vertikale Polarisation möglich.

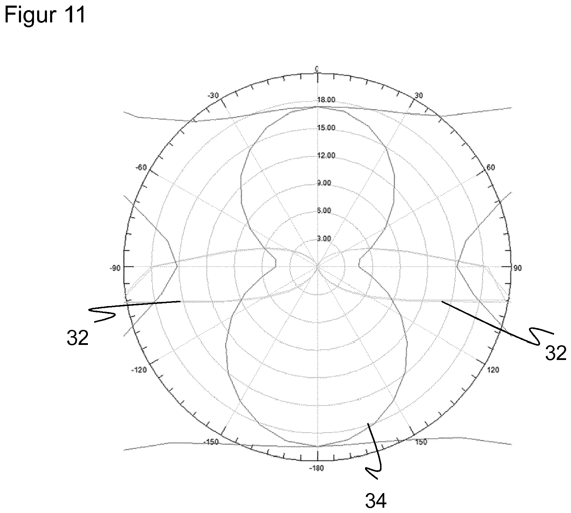

Die Figuren 10 und 11 illustrieren die Effekte der gezielten Verstimmung zweier CLL-Einzelantennen 10b, 10d weiter. Dabei ist Figur 10 ein Strahlungsdiagramm des Antennengewinns (realized gain total in dBiC) für den Betrieb aller vier CLL-Einzelantennen 10a-d als Referenz (äußere Linie 32) und bei gezielter Verstimmung der beiden CLL-Einzelantennen 10b, 10d (innere Linie 34). Figur 11 zeigt ein entsprechendes Polardiagramm des Achsenverhältnisses der Antenne ebenfalls im Vergleich bei Betrieb aller vier CLL-Einzelantennen 10a-d (Linie 32) als Referenz und bei gezielter Verstimmung der beiden CLL-Einzelantennen 10b, 10d (Linie 34).

Der Antennengewinn der Antenne 100 bei Kombination aller vier CLL-Einzelantennen 10a-d müsste bei gezielter Verstimmung der CLL-Einzelantennen 10b, 10d theoretisch 3dB unter dem Gewinn der Antennen im Normalbetrieb bei gleicher Abstimmung liegen. In Simulationen ergab sich bei dieser Konstellation ein um ca. 4dB geringerer Gewinn, wobei dieser zusätzliche Verlust durch Effekte im Leistungsteilernetzwerk 26 erklärt werden kann. Da die meisten RFID Transponder ohnehin linear polarisiert sind, würde ein senkrecht, d.h. in der Achse der nicht verstimmten CLL-Antennen 10a, 10c ausgerichteter RFID-Transponder weiterhin ungefähr die gleiche Energiemenge erhalten wie bei einer zirkularen Polarisation. RFID-Transponder in der anderen, horizontalten Ausrichtung jedoch würden deutlich weniger Energie aus dem Sendefeld der RFID-Lesevorrichtung nutzen können. Ein Aufwecken solcher RFID-Transponder und damit eine Kommunikation wäre also deutlich unwahrscheinlicher. Auf diese Weise kann für bestimmte Anwendungen mit bekannter Transponderausrichtung ein ungewolltes Auslesen benachbarter Transponder mit der nicht passenden Ausrichtung reduziert werden. Für die RFID-Lesevorrichtung bedeutet dies weniger RFID-Transponder, die im gleichen Lesezeitraum abgefragt werden müssen, und damit eine höhere Leserate und eine bessere Erkennungswahrscheinlichkeit.

## Patentansprüche

1. Antenne (100) für eine RFID-Lesevorrichtung mit mindestens einer CLL-Einzelantenne (10), wobei eine CLL-Einzelantenne (10) eine Antenne ist, die eine innere Antennenschleife (12) und eine die innere Antennenschleife (12) umgebende kapazitiv aufgeladene Leiterschleife (14) aufweist, in die eine Kapazität (16) eingebracht ist, wobei die innere Antennenschleife (12) u-förmig ausgebildet ist, wobei ein erster Endpunkt (18) der inneren Antennenschleife (12) mit einer Speisungsleitung (20) und ein zweiter Endpunkt (22) der inneren Antennenschleife (12) mit einer Massefläche (24, 30) verbunden ist, **dadurch gekennzeichnet,**
**dass** die Antenne (100) mehrere CLL-Einzelantennen (10a-d), die unterschiedlich orientiert sind, und eine Speiseschaltung (26) mit mindestens einem Leistungsteiler aufweist, der dafür ausgebildet ist, die CLL-Einzelantennen (10a-d) mit einer passenden Phase zu versorgen, um die CLL-Einzelantennen (10a-d) zur Erzeugung einer zirkularen Polarisation mit einem gegenseitigen Phasenversatz zu betreiben,
und **dass** die Antenne (100) rechtsdrehend zirkular polarisiert ist und die CLL-Einzelantennen (10a-d) so zu einer gemeinsamen Grundfläche (30) orientiert sind, dass der erste Endpunkt (18) weiter von der Grundfläche (30) beabstandet ist als der zweite Endpunkt (22),
oder dass die Antenne (100) linksdrehend zirkular polarisiert ist und die CLL-Einzelantennen (10a-d) so zu der gemeinsamen Grundfläche (30) orientiert sind, dass der erste Endpunkt (18) näher von der Grundfläche (30) beabstandet ist als der zweite Endpunkt (22).

2. Antenne (100) nach Anspruch 1,
wobei die CLL-Einzelantenne (10a-d) eine Massefläche (24) aufweist, die mit der inneren Antennenschleife (12) und/oder der umgebenden Leiterschleife (14) verbunden ist.

3. Antenne (10) nach einem der vorherigen Ansprüche, wobei die umgebende kapazitiv aufgeladene Leiterschleife (14) u-förmig ausgebildet und an beiden Endpunkten mit einer Massefläche (24, 30) verbunden ist.

4. Antenne (100) nach einem der vorherigen Ansprüche, wobei die in die umgebende kapazitiv aufgeladene Leiterschleife (14) eingebrachte Kapazität (16) elektrisch verstellbar ist.

5. Antenne (100) nach einem der vorherigen Ansprüche, wobei die innere Antennenschleife (12) und die umgebende kapazitiv aufgeladene Leiterschleife (14) der CLL-Einzelantenne (10a-d) in einer Ebene angeordnet sind.

6. Antenne (100) nach einem der vorherigen Ansprüche, wobei die mehreren CLL-Einzelantennen (10a-d) auf einer gemeinsamen Grundfläche (30) angeordnet sind.

7. Antenne (100) nach einem der vorherigen Ansprüche, wobei die Antenne (100) zwei CLL-Einzelantennen (10a-b) aufweist, die zueinander in einem 90°-Winkel orientiert sind und wobei die Speiseschaltung (26) die beiden CLL-Einzelantennen mit einem gegenseitigen Phasenversatz von 90° betreibt, insbesondere einen 90°-Leistungsteiler (28) aufweist.

8. Antenne (100) nach einem der Ansprüche 1 bis 6 wobei die Antenne (100) vier CLL-Einzelantennen (10a-d) aufweist, die zueinander jeweils in einem 90°-Winkel orientiert sind und wobei die Speiseschaltung (26) die CLL-Einzelantennen (10a-d) mit einem jeweiligen Phasenversatz von 90° betreibt, insbesondere mehrere 90°-Leistungsteiler (28a-c) aufweist.

9. Antenne (100) nach Anspruch 8 wobei die CLL-Einzelantennen (10a-d) jeweils senkrecht zu einer Ebene (30) und kreuzförmig zueinander ausgerichtet sind.

10. Antenne (100) nach einem der vorherigen Ansprüche, wobei die CLL-Einzelantennen (10a-d) in einer Ebene (30) angeordnet sind.

11. Antenne (100) nach einem der vorherigen Ansprüche, wobei die Polarisation zur Anpassung im Betrieb durch Verstimmen mindestens einer CLL-Einzelantenne (10a-d) mittels Anpassung der Kapazität (16) der umgebenden aufgeladenen Leiterschleife (14) verändert wird.

12. Antenne (100) nach Anspruch 8, wobei eine elliptische Polarisation durch Verstimmen zweier diagonal gegenüberliegender CLL-Einzelantennen (10a, 10c oder 10b, 10d) mittels Anpassung der Kapazität (16) der umgebenden aufgeladenen Leiterschleife (14) einstellbar ist.

13. Verfahren zum Senden und/oder Empfangen von RFID-Signalen mit einer Antenne (100), die mindestens eine CLL-Einzelantenne (10) aufweist, wobei eine CLL-Einzelantenne (10) eine Antenne ist, die eine innere Antennenschleife (12) und eine die innere Antennenschleife (12) umgebende kapazitiv aufgeladene Leiterschleife (14) aufweist, in die eine Kapazität (16) eingebracht ist, wobei die innere Antennenschleife (12) u-förmig ausgebildet ist, wobei ein erster Endpunkt (18) der inneren Antennenschleife (12) mit einer Speisungsleitung (20) und ein zweiter Endpunkt (22) der inneren Antennenschleife (12) mit einer Massefläche (24, 30) verbunden ist, **dadurch gekennzeichnet,**
**dass** eine zirkulare Polarisation erzeugt wird, indem mehrere CLL-Einzelantennen (10a-d) der Antenne (100), die unterschiedlich orientiert sind, von einer Speiseschaltung (26) mit mindestens einem Leistungsteiler mit einer passenden Phase versorgt und so mit einem gegenseitigen Phasenversatz betrieben werden
und **dass** die Antenne (100) rechtsdrehend zirkular polarisiert wird, indem die CLL-Einzelantennen (10a-d) so zu einer gemeinsamen Grundfläche (30) orientiert werden, dass der erste Endpunkt (18) weiter von der Grundfläche (30) beabstandet ist als der zweite Endpunkt (22),
oder dass die Antenne (100) linksdrehend zirkular polarisiert wird, indem die CLL-Einzelantennen (10a-d) so zu der gemeinsamen Grundfläche (30) orientiert werden, dass der erste Endpunkt (18) näher von der Grundfläche (30) beabstandet ist als der zweite Endpunkt (22).

## Claims

1. An antenna (100) for an RFID reading apparatus having at least one individual CLL antenna (10), wherein a CLL antenna (10) is an antenna that has an inner antenna loop (12) and a capacitively loaded conductor loop (14) which surrounds the inner antenna loop (12) and into which a capacitance (16) is introduced, wherein the inner antenna loop (12) is U-shaped, with a first end point (18) of the inner antenna loop (12) being connected to a feed line (20) and a second end point (22) of the inner antenna loop (12) being connected to a ground plane (24, 30),
**characterized in that** the antenna (100) comprises a plurality of individual CLL antennas (10a-d), which are differently oriented, and a feed circuit (26) having at least one power divider configured to provide a suitable phase for the individual CLL antennas (10a-d) in order to operate the individual CLL antennas (10a-d) for generating a circular polarization with a mutual phase offset
and **in that** the antenna (100) is right-handed circularly polarized and the plurality of individual CLL antennas (10a-d) are oriented with respect to a common base surface (30) such that the first end point (18) is spaced further away from the base surface (30) than the second end point (22),
or **in that** the antenna (100) is left-handed circularly polarized and the plurality of individual CLL antennas (10a-d) are oriented with respect to the common base surface (30) such that the first end point (18) is spaced closer with respect to the base surface (30) than the second end point (22).

2. The antenna (100) in accordance with claim 1,
wherein the individual CLL antenna (10a-d) has a ground plane (24) which is connected to the inner antenna loop (12) and/or the surrounding capacitively loaded conductor loop (14).

3. The antenna (100) in accordance with one of the preceding claims,
wherein the surrounding capacitively loaded conductor loop (14) is U-shaped and is connected to a ground plane (24, 30) at both end points.

4. The antenna (100) in accordance with one of the preceding claims,
wherein the capacitance (16) introduced into the surrounding capacitively loaded conductor loop (14) is electrically adjustable.

5. The antenna (100) in accordance with one of the preceding claims,
wherein the inner antenna loop (12) and the surrounding capacitively loaded conductor loop (14) of the individual CLL antenna (10a-d) are arranged in one plane.

6. The antenna (100) in accordance with one of the preceding claims,
wherein the plurality of individual CLL antennas (10a-d) are arranged on a common base surface (30).

7. The antenna (100) in accordance with one of the preceding claims,
wherein the antenna (100) has two individual CLL antennas (10a-b) that are each oriented at a 90° angle with respect to one another, and wherein the feed circuit (26) operates the two individual CLL antennas (10a-b) with a respective phase offset of 90°, in particular comprises a 90° power divider (28).

8. The antenna (100) in accordance with one of claims 1 to 6,
wherein the antenna (100) has four individual CLL antennas (10a-d) that are each oriented at a 90° angle with respect to one another, and wherein the feed circuit (26) operates the four individual CLL antennas (10a-d) with a respective phase offset of 90°, in particular comprises a plurality of 90° power dividers (28a-c).

9. The antenna (10) in accordance with claim 8,
wherein the individual CLL antennas (10a-d) are each aligned perpendicular to a plane (30) and in the shape of a cross with respect to one another.

10. The antenna (100) in accordance with one of the preceding claims,
wherein the plurality of individual CLL antennas (10a-d) are arranged in one plane (30).

11. The antenna (100) in accordance with one of the preceding claims,
wherein the polarization is varied for an adaption during operation via detuning at least one individual CLL antenna (10a-d) by means of adjusting the capacity (16) of the surrounding capacitively loaded conductor loop (14).

12. The antenna (100) in accordance with claim 8,
wherein an elliptic polarization can be set by detuning two diagonally opposed individual CLL antennas (10a, 10c or 10b, 10d) by means of adjusting the capacity (16) of the surrounding capacitively loaded conductor loop (14).

13. A method for transmitting and/or receiving RFID signals with an antenna (100) having at least one individual CLL antenna (10), wherein a CLL antenna (10) is an antenna which has an inner antenna loop (12) and a capacitively loaded conductor loop (14) which surrounds the inner antenna loop (12) and into which a capacitance (16) is introduced, wherein the inner antenna loop (12) is U-shaped, with a first end point (18) of the inner antenna loop (12) being connected to a feed line (20) and a second end point (22) of the inner antenna loop (12) being connected to a ground plane (24, 30),
**characterized in that** a circular polarization is generated by a plurality of individual CLL antennas (10a-d) of the antenna (100), which are differently oriented, being supplied with a suitable phase by a feed circuit (26) having at least one power divider and thus being operated with a mutual phase offset,
**in that** the antenna (100) is right-handed circularly polarized by the plurality of individual CLL antennas (10a-d) being oriented with respect to a common base surface (30) such that the first end point (18) is spaced further away from the base surface (30) than the second end point (22),
or **in that** the antenna (100) is left-handed circularly polarized by the plurality of individual CLL antennas (10a-d) being oriented with respect to the common base surface (30) such that the first end point (18) is spaced closer with respect to the base surface (30) than the second end point (22).

## Revendications

1. Antenne (100) pour un dispositif de lecture RFID, comportant au moins une antenne individuelle CLL (10),
dans laquelle une antenne individuelle CLL (10) est une antenne qui comprend une boucle d'antenne intérieure (12) et une boucle de conducteur à charge capacitive (14) entourant la boucle d'antenne intérieure (12) et dans laquelle est intégrée une capacité (16),
la boucle d'antenne intérieure (12) est réalisée en forme de U, un premier point d'extrémité (18) de la boucle d'antenne intérieure (12) étant branché à une ligne d'alimentation (20) et un second point d'extrémité (22) de la boucle d'antenne intérieure (12) étant branché à une surface de masse (24, 30),
**caractérisée en ce que**
l'antenne (100) comprend plusieurs antennes individuelles CLL (10a - d) qui sont orientées différemment, ainsi qu'un circuit d'alimentation (26) pourvu d'au moins un diviseur de puissance qui est réalisé pour alimenter les antennes individuelles CLL (10a - d) avec une phase adaptée, afin de faire fonctionner les antennes individuelles CLL (10a - d) avec un déphasage mutuel pour générer une polarisation circulaire,
et **en ce que** l'antenne (100) est à polarisation circulaire droite et les antennes individuelles CLL (10a - d) sont orientées vers une surface de base commune (30) de telle sorte que le premier point d'extrémité (18) est espacé plus loin de la surface de base (30) que le second point d'extrémité (22), ou **en ce que** l'antenne (100) est à polarisation circulaire gauche et les antennes individuelles CLL (10a - d) sont orientées vers la surface de base commune (30) de telle sorte que le premier point d'extrémité (18) est espacé moins loin de la surface de base (30) que le second point d'extrémité (22).

2. Antenne (100) selon la revendication 1,
dans laquelle l'antenne individuelle CLL (10a - d) présente une surface de masse (24) qui est connectée à la boucle d'antenne intérieure (12) et/ou à la boucle de conducteur (14) qui l'entoure.

3. Antenne (10) selon l'une des revendications précédentes,
dans laquelle la boucle de conducteur (14) à charge capacitive entourant est réalisée en forme de U et est connectée, aux deux points d'extrémité, à une surface de masse (24, 30).

4. Antenne (100) selon l'une des revendications précédentes,
dans laquelle la capacité (16) intégrée dans la boucle de conducteur (14) à charge capacitive entourant est électriquement variable.

5. Antenne (100) selon l'une des revendications précédentes,
dans laquelle la boucle d'antenne intérieure (12) et la boucle de conducteur (14) à charge capacitive entourant de l'antenne individuelle CLL (10a - d) sont agencées dans un plan.

6. Antenne (100) selon l'une des revendications précédentes,
dans laquelle les plusieurs antennes individuelles CLL (10a - d) sont agencées sur une surface de base commune (30).

7. Antenne (100) selon l'une des revendications précédentes,
dans laquelle l'antenne (100) comprend deux antennes individuelles CLL (10a - b) qui sont orientées sous un angle de 90° l'une par rapport à l'autre, et le circuit d'alimentation (26) fait fonctionner les deux antennes individuelles CLL avec un déphasage mutuel de 90°, et comprend en particulier un diviseur de puissance à 90° (28).

8. Antenne (100) selon l'une des revendications 1 à 6,
dans laquelle l'antenne (100) comprend quatre antennes individuelles CLL (10a - d) qui sont orientées sous un angle de 90° les unes par rapport aux autres, et le circuit d'alimentation (26) fait fonctionner les antennes individuelles CLL (10a - d) avec un déphasage mutuel de 90°, et comprend en particulier plusieurs diviseurs de puissance à 90° (28a - c).

9. Antenne (100) selon la revendication 8,
dans laquelle les antennes individuelles CLL (10a - d) sont orientées chacune perpendiculairement à un plan (30) et en forme de croix les unes par rapport aux autres.

10. Antenne (100) selon l'une des revendications précédentes,
dans laquelle les antennes individuelles CLL (10a - d) sont agencées dans un plan (30).

11. Antenne (100) selon l'une des revendications précédentes,
dans laquelle pour l'adaptation pendant le fonctionnement, la polarisation est modifiée par désaccord d'au moins une antenne individuelle CLL (10a - d) par adaptation de la capacité (16) de la boucle de conducteur chargée entourant (14).

12. Antenne (100) selon la revendication 8,
dans laquelle une polarisation elliptique est réglable par désaccord de deux antennes individuelles CLL (10a, 10c ou 10b, 10d) diagonalement opposées l'une à l'autre par adaptation de la capacité (16) de la boucle de conducteur chargée entourant (14).

13. Procédé d'émission et/ou de réception de signaux RFID au moyen d'une antenne (100) qui comprend au moins une antenne individuelle CLL (10), dans lequel une antenne individuelle CLL (10) est une antenne qui comprend une boucle d'antenne intérieure (12) et une boucle de conducteur à charge capacitive (14) entourant la boucle d'antenne intérieure (12) et dans laquelle est intégrée une capacité (16),
la boucle d'antenne intérieure (12) est réalisée en forme de U, un premier point d'extrémité (18) de la boucle d'antenne intérieure (12) étant branché à une ligne d'alimentation (20) et un second point d'extrémité (22) de la boucle d'antenne intérieure (12) étant branché à une surface de masse (24, 30),
**caractérisé en ce que**
on génère une polarisation circulaire du fait que plusieurs antennes individuelles CLL (10a - d) de l'antenne (100) qui sont orientées différemment sont alimentées avec une phase adaptée par un circuit d'alimentation (26) pourvu d'au moins un diviseur de puissance et fonctionnent ainsi avec un déphasage mutuel,
et **en ce que** l'antenne (100) est à polarisation circulaire droite du fait que les antennes individuelles CLL (10a - d) sont orientées vers une surface de base commune (30) de telle sorte que le premier point d'extrémité (18) est espacé plus loin de la surface de base (30) que le second point d'extrémité (22),
ou **en ce que** l'antenne (100) est à polarisation circulaire gauche du fait que les antennes individuelles CLL (10a - d) sont orientées vers la surface de base commune (30) de telle sorte que le premier point d'extrémité (18) est espacé moins loin de la surface de base (30) que le second point d'extrémité (22).
